# EUROPEAN PATENT SPECIFICATION

(11) **EP 4 563 913 B1**
(45) Date of publication and mention of the grant of the patent: **26.11.2025**
(21) Application number: 24183932.3
(22) Date of filing: 24.06.2024
(51) Int. Cl.: F24H 3/08, F24H 3/04, B29C 41/46, F23D 99/00, F24H 9/1863, F24H 9/1881, F24H 9/20, F24H 15/208, F24H 15/36, F24H 15/37

(54) **HOT AIR GENERATOR WITH HYBRID COMBUSTION CHAMBER FOR ROTATIONAL MOLDING SYSTEMS**
HEISSLUFTERZEUGER MIT HYBRIDER BRENNKAMMER FÜR ROTATIONSFORMANLAGEN
GÉNÉRATEUR D'AIR CHAUD À CHAMBRE DE COMBUSTION HYBRIDE POUR SYSTÈMES DE MOULAGE PAR ROTATION

(30) Priority: 29.11.2023 IT 202300025407
(43) Date of publication of application: 04.06.2025
(73) Proprietor: Rotoplastic S.r.l., 21017 Samarate (VA) (IT)
(72) Inventor: Orefice, Oscar, 21052 Busto Arsizio (VA) (IT); Cusaro, Andrea, 27023 Cassolnovo (PV) (IT)
(74) Representative: Praxi Intellectual Property Milano

(56) References cited:
- WO-A1-02/057691
- CN-A- 102 173 020
- CN-A- 104 354 255
- CN-U- 203 957 248
- CN-U- 208 714 306

## Description

### BACKGROUND OF THE INVENTION

The present invention relates to a hot air generator with a hybrid combustion chamber for rotational molding systems.

Rotational molding systems are systems in which a plastic material, brought to its melting temperature, is placed inside a rotating planetary mold, to be distributed on the internal walls thereof, in order to replicate their geometry.

Generators used in these systems, whether with open flame or surface combustion, have the disadvantage of always requiring for their operation a supply of fossil fuel, such as gas, diesel, and the like, without which the generator cannot operate.

Patent CN 203 957 248 U describes an energy-saving rotational molding machine wherein the heat developed in the combustion chamber can be quickly transferred outside, allowing complete use of the heat dissipated in the combustion chamber and reducing thermal energy consumption.

### SUMMARY OF THE INVENTION

The main object of this invention is to provide a hot air generator, capable of also operating with auxiliary heating means, other than a fossil fuel burner.

Another object of the invention is to provide a hot air generator of the above-mentioned type, that allows to benefit from the contribution of an auxiliary heat source, suitable to minimize fossil fuel consumption.

These and other objects are achieved with the hot air generator and the process according to claims 1 and 4. Preferred embodiments of the invention result from the remaining claims.

Compared to traditional hot air generators for rotational molding systems, the one according to the invention offers the advantage of being able to operate also with auxiliary heating means, other than a fuel burner.

Another advantage of the generator of this invention is the possibility of using an auxiliary or additional heat source compared to traditional burners, which is suitable to minimize fossil fuel consumption.

### BRIEF DESCRIPTION OF THE DRAWINGS

These and other objects, advantages, and characteristics are evident from the following description of the preferred embodiments of the hot air generator of the invention, illustrated, by way of non-limiting examples, in the figures of the attached drawings.

In them:
- Figure 1 shows the hot air generator of the invention, with an exploded view of the heat exchanger;
- Figure 2 shows an exploded view of the detail of the thermal unit of the generator in Figure 1;
- Figures 3 and 4 show examples of the use of the heat exchanger from the previous figures, with an open flame burner and with a surface combustion burner, respectively;
- Figure 5 shows in section the detail of the combustion chamber of the heat exchanger of Figure 2.

### DETAILED DESCRIPTION OF PREFERRED EMBODIMENTS

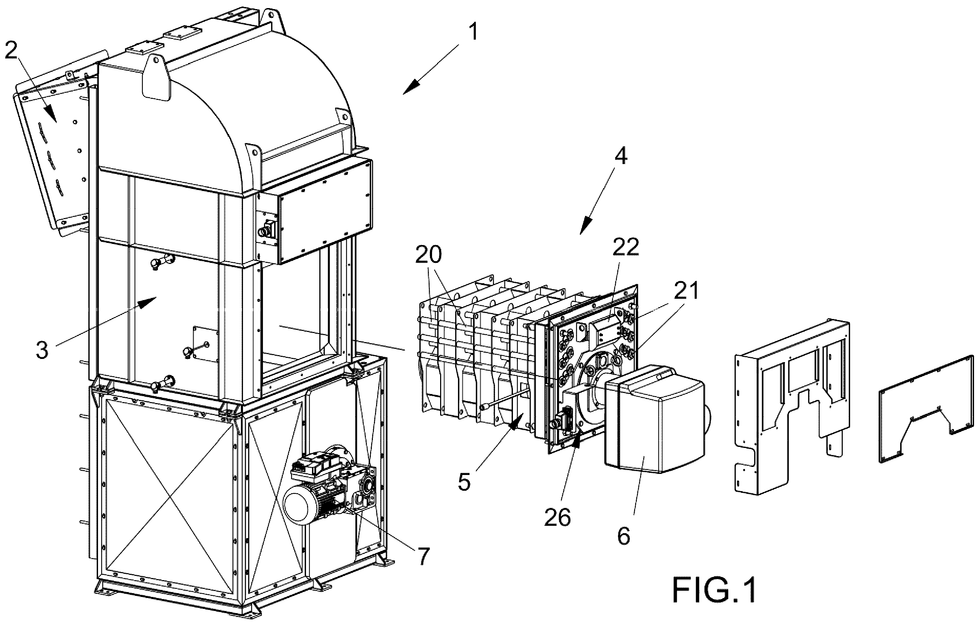

The hot air generator of the invention, indicated as a whole with the numeral 1 in Figure 1, includes, in its upper part, a diffuser 2 and, in the central part, an intermediate compartment 3 housing the thermal unit 4 consisting of the heat exchanger 5 and the burner 6. In the lower part of the generator 1 the ventilation unit 7 for the heat exchanger 5 is instead provided.

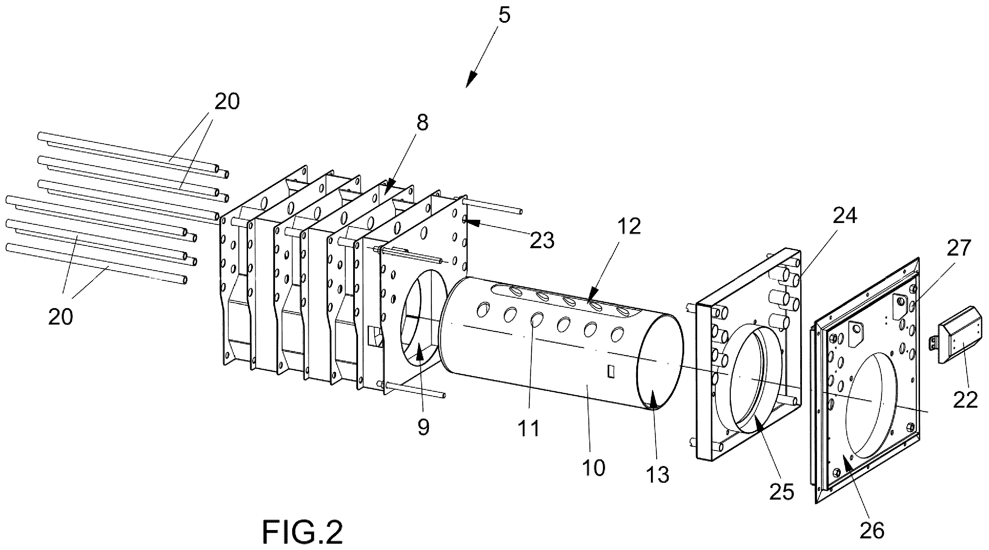

As better shown in Figure 2, the heat exchanger 5 consists of a finned body 8, containing inside it the housing 9 of a tube 10 protecting the flame of the burner 6.

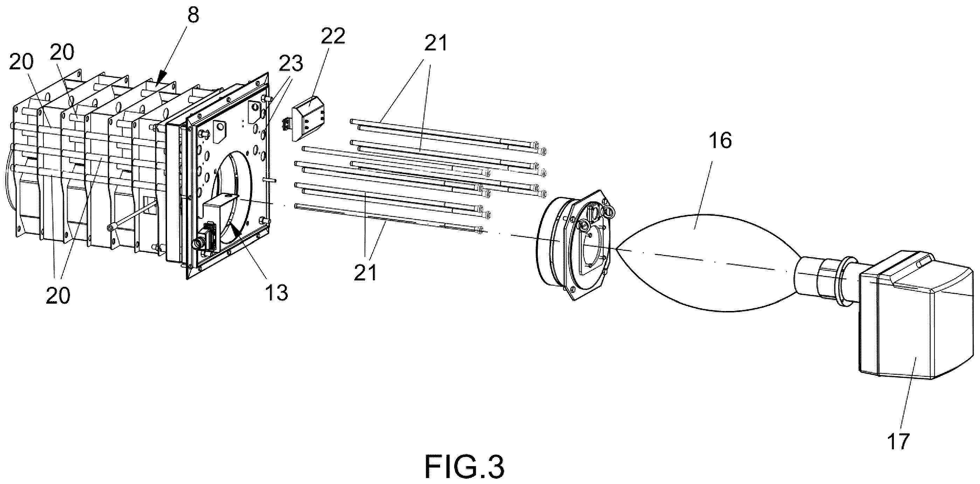

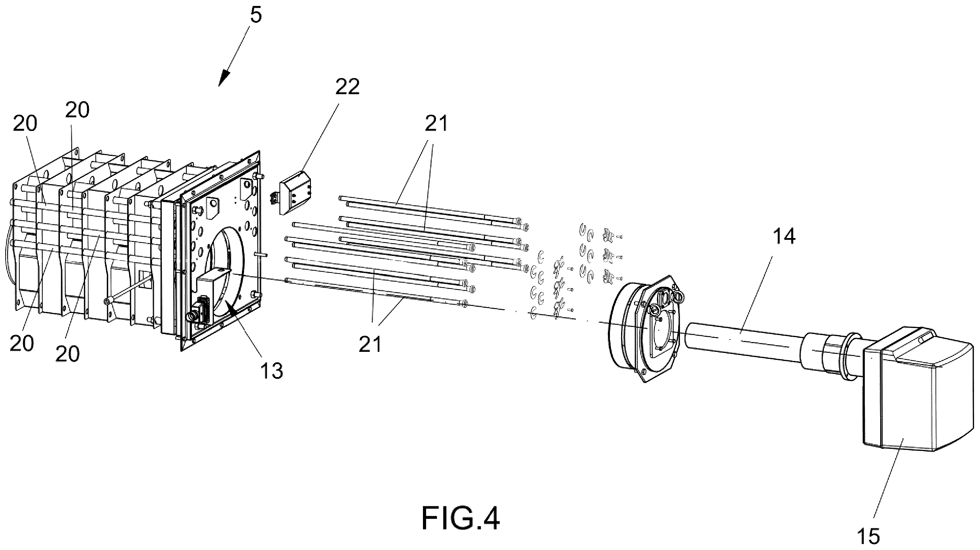

Specifically, the tube 10 has at its upper portion a plurality of holes 11 and a longitudinal opening 12 for exhausting combustion fumes. Inside the combustion chamber 13 of the tube 10 are instead housed either the radiant tube 14 of a surface combustion burner 15 (Figure 4), or the flame 16 of an open flame burner 17 (Figure 3).

In both these embodiments, besides the fossil fuel-fed burner 15, 17, there is also provided a battery of resistors 21 arranged inside respective tubes 20, which in turn are housed in the holes 23 of the finned body or unit 8, in the holes 24 of the inner flange 25 of the heat exchanger 5, and in the holes 27 of the outer cover 26 of the latter (Figures 2 to 4).

An electrical connector 22 is moreover provided mounted on said outer cover 26 to power the resistors 21.

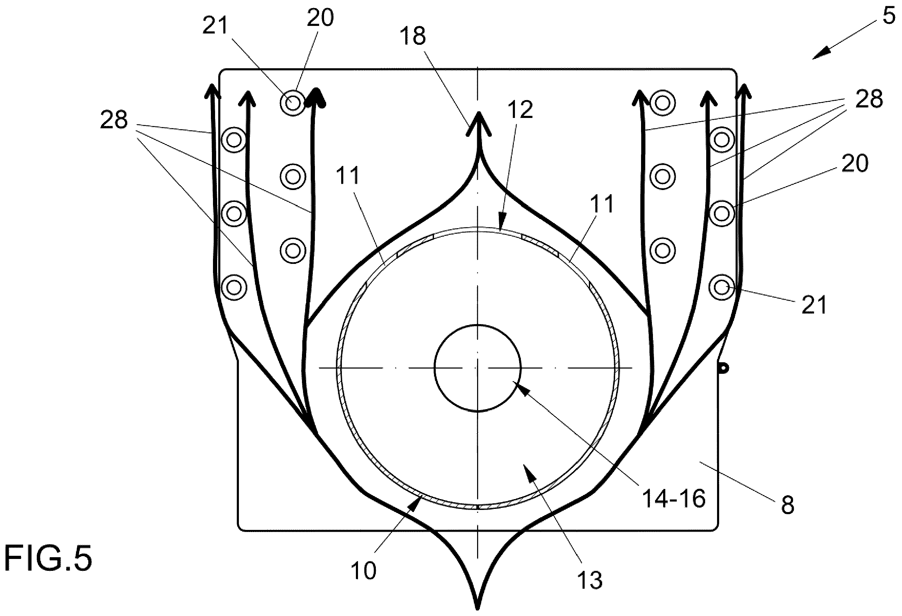

As better shown in Figure 5, the hot air circulating outside the flame protection tube 10 has a flow 18, that receives heat from the burner 6 by thermal exchange through the flame protection tube 10 and receives combustion gases passing through the holes 11 and the longitudinal opening 12 thereof, as well as additional hot air flows 28 that receive heat from the tubes 20 heated by their internal resistors 21.

The burner 6 and the resistors 21 operate simultaneously, heating the air for example in the initial phase of recovery of the plastic material's melting temperature.

Once this temperature has been reached, the burner 6 switches off, and the maintenance of the operating temperature of the hot air generator 1 is left solely to the battery of resistors 21, except for the burner resuming operation if the temperature inside the system's molding chamber drops below a preset value.

## Claims

1. Hot air generator for rotational molding systems of a plastic material, of the type comprising an upper diffuser (2), a thermal unit (4), an intermediate compartment (3) housing the thermal unit (4), and a lower ventilation unit (7), wherein said thermal unit (4) comprises a burner (6) and a heat exchanger (5), the burner (6) being arranged at the heat exchanger (5) provided with a finned body (8) and a flame protection tube (10), wherein said tube (10) has an internal combustion chamber (13) and wherein said finned body (8) has a housing (9) for said tube (10) for the formation of an air flow (18) heated by said burner (6), **characterized in that** is also comprises a battery of resistors (21) for the formation of additional hot air flows (28), also circulating outside said flame protection tube (10).

2. Generator according to claim 1, **characterized in that** said finned body (8) is provided with holes (23), said heat exchanger (5) further comprising an inner flange (25) provided with holes (24) and an outer cover (26) provided with holes (27), said resistors (21) being arranged inside respective tubes (20), which are in turn housed in the holes (23) of the finned body (8), in the holes (24) of the inner flange (25) of the heat exchanger (5), and in the holes (27) of the outer cover (26) of the latter.

3. Generator according to claim 2, **characterized in that** it further comprises an electrical connector (22), mounted on said outer cover (26) to power said resistors (21).

4. Process for heating air of the molding chamber of a rotational molding system of a plastic material with the generator according to one or more of the preceding claims, **characterized in that** it provides for an initial phase of recovery of the melting temperature of said plastic material, in which the burner (6) and the resistors (21) simultaneously heat the air to said melting temperature, and a subsequent phase in which, once said melting temperature has been reached, the burner (6) switches off, and the maintenance of the operating temperature of the hot air generator (1) is left solely to the battery of resistors (21).

5. Process according to claim 4, **characterized in that** the burner (6) resumes operation when the temperature inside the molding chamber of said system falls below a preset value.

## Patentansprüche

1. Heißlufterzeuger für Rotationsformsysteme für ein Kunststoffmaterial, der Art umfassend einen oberen Diffusor (2), eine Thermoeinheit (4), ein Zwischenfach (3), das die Thermoeinheit (4) aufnimmt und eine untere Belüftungseinheit (7), wobei die Thermoeinheit (4) einen Brenner (6) und einen Wärmetauscher (5) umfasst, wobei der Brenner (6) an dem Wärmetauscher (5) angeordnet ist, der mit einem Rippenkörper (8) und einem Flammschutzrohr (10) versehen ist, wobei das Rohr (10) eine innere Brennkammer (13) aufweist und wobei der Rippenkörper (8) ein Gehäuse (9) für das Rohr (10) für die Ausbildung eines Luftstroms (18) aufweist, der durch den Brenner (6) erwärmt wird, **dadurch gekennzeichnet, dass** er ebenso eine Batterie von Widerständen (21) für die Ausbildung zusätzlicher Heißluftströme (28) umfasst, die ebenso außerhalb des Flammschutzrohrs (10) zirkulieren.

2. Erzeuger nach Anspruch 1, **dadurch gekennzeichnet, dass** der Rippenkörper (8) mit Löchern (23) versehen ist, der Wärmetauscher (5) ferner umfassend einen inneren Flansch (25), der mit Löchern (24) versehen ist, und eine äußere Abdeckung (26), die mit Löchern (27) versehen ist, wobei die Widerstände (21) im inneren von jeweiligen Rohren (20) angeordnet sind, die wiederum in den Löchern (23) des Rippenkörpers (8), in den Löchern (24) des inneren Flansches (25) des Wärmetauschers (5) und in den Löchern (27) der äußeren Abdeckung (26) des Letzteren aufgenommen sind.

3. Erzeuger nach Anspruch 2, **dadurch gekennzeichnet, dass** er ferner einen elektrischen Verbinder (22) umfasst, der an der äußeren Abdeckung (26) montiert ist, um die Widerstände (21) mit Leistung zu versorgen.

4. Prozess zum Erwärmen von Luft der Formkammer einer Rotationsformanlage für ein Kunststoffmaterial mit dem Erzeuger nach einem oder mehreren der vorstehenden Ansprüche, **dadurch gekennzeichnet, dass** es eine anfängliche Phase einer Wiederherstellung der Schmelztemperatur des Kunststoffmaterials, in der der Brenner (6) und die Widerstände (21) gleichzeitig die Luft auf die Schmelztemperatur erwärmen, und eine anschließende Phase bereitstellt, in der, sobald die Schmelztemperatur erreicht ist, der Brenner (6) abgeschaltet wird und die Aufrechterhaltung der Betriebstemperatur des Heißlufterzeugers (1) ausschließlich der Batterie von Widerständen (21) überlassen wird.

5. Verfahren nach Anspruch 4, **dadurch gekennzeichnet, dass** der Brenner (6) den Betrieb wieder aufnimmt, wenn die Temperatur im Inneren der Formkammer des Systems unter einen voreingestellten Wert fällt.

## Revendications

1. Générateur d'air chaud destiné à des systèmes de moulage par rotation d'une matière plastique, du type comprenant un diffuseur supérieur (2), une unité thermique (4), un compartiment intermédiaire (3) logeant l'unité thermique (4) et une unité de ventilation inférieure (7), dans lequel ladite unité thermique (4) comprend un brûleur (6) et un échangeur de chaleur (5), le brûleur (6) étant agencé au niveau de l'échangeur de chaleur (5) pourvu d'un corps à ailettes (8) et d'un tube (10) de protection anti-flammes, dans lequel ledit tube (10) a une chambre de combustion interne (13) et dans lequel ledit corps à ailettes (8) a un logement (9) pour ledit tube (10) destiné à la formation d'un écoulement d'air (18) chauffé par ledit brûleur (6), **caractérisé en ce qu'**il comprend également une batterie de résistances (21) pour la formation d'écoulements d'air chaud supplémentaires (28), circulant également à l'extérieur dudit tube (10) de protection anti-flammes.

2. Générateur selon la revendication 1, **caractérisé en ce que** ledit corps à ailettes (8) est pourvu de trous (23), ledit échangeur de chaleur (5) comprenant en outre une bride interne (25) pourvue de trous (24) et un couvercle extérieur (26) pourvu de trous (27), lesdites résistances (21) étant agencées à l'intérieur de tubes (20) respectifs, qui sont à leur tour logés dans les trous (23) du corps à ailettes (8), dans les trous (24) de la bride interne (25) de l'échangeur de chaleur (5), et dans les trous (27) du couvercle extérieur (26) de ce dernier.

3. Générateur selon la revendication 2, **caractérisé en ce qu'**il comprend en outre un connecteur électrique (22), monté sur ledit couvercle extérieur (26) pour alimenter en puissance lesdites résistances (21).

4. Procédé permettant de chauffer de l'air de la chambre de moulage d'un système de moulage par rotation d'une matière plastique avec le générateur selon l'une ou plusieurs des revendications précédentes, **caractérisé en ce qu'**il assure une phase initiale de rétablissement de la température de fusion de ladite matière plastique, dans laquelle le brûleur (6) et les résistances (21) chauffent simultanément l'air à ladite température de fusion, et une phase suivante dans laquelle, une fois que ladite température de fusion a été atteinte, le brûleur (6) se coupe, et le maintien de la température de fonctionnement du générateur d'air chaud (1) est laissé uniquement à la batterie de résistances (21).

5. Procédé selon la revendication 4, **caractérisé en ce que** le brûleur (6) reprend le fonctionnement lorsque la température à l'intérieur de la chambre de moulage dudit système descend en dessous d'une valeur préréglée.
